# EUROPEAN PATENT APPLICATION

(11) **EP 4 462 005 A1**
(43) Date of publication of application: **13.11.2024**
(21) Application number: 24174692.4
(22) Date of filing: 08.05.2024
(51) Int. Cl.: F16L 41/04, B23C 9/00, B23Q 11/00, F16L 41/08

(54) **A DEVICE AND A METHOD FOR REMOVING FLUID FROM AN UNDERWATER CONTAINER**

(30) Priority: 08.05.2023 FI 20235513
(71) Applicant: MD Maritime Diving Oy, 01201 Vantaa (FI)
(72) Inventor: Haikola, Brian, 01201 Vantaa (FI)
(74) Representative: Koivisto, Harri Kristian

(57) **Abstract**

A device (1) and a method for removing fluid from an underwater container (3) comprise a drill bit (10), having a twist drill section (12), at least one flute (14), a tap drill section (13) and a shank (16); a suction device (30), comprising two openings (33) at opposite sides of the suction device (30) and a cavity (32) for the drill bit (10), where the drill bit (10) is rotatably pushed through the suction device (30) for drilling the underwater container (3). An outlet (31) is connectable to a suction hose (4), said outlet (31) extending to the cavity (32). The at least one flute (14) extends to the cavity (32) during drilling the underwater container (3) and leads fluid from the underwater container (3) to the outlet (31).

## Description

### BACKGROUND

The present disclosure relates to underwater operations, particularly to removing fluids from containers. One example of an underwater container is a shipwreck with a tank full of oil or fuel. The tank should be emptied before oil escapes from the tank. If the shipwreck is left to the seabed, corrosion will eventually puncture the tank and the environment will be damaged by the oil.

Underwater operations are extremely difficult. Tools are operated by divers or remotely operated vehicles. Any complications during the operation increase the risk of failure. Current methods for removing fluid from shipwreck include drilling at least one hole to the tank or other container, removing the drilling equipment from the hole and placing a suction equipment to the drilled hole. Changing equipment underwater may allow some of the oil to escape the suction equipment. Visibility below the water surface may be poor. Movements in the murky water may further reduce visibility. Complexity may cause mistakes in the process.

### SUMMARY

This summary is provided to introduce a selection of concepts in a simplified form that will be further described below in the detailed description. This summary is not intended to identify key features, nor to identify essential features of the claimed subject matter, nor to be used to limit the scope of the claimed subject matter. Furthermore, the claimed subject matter is not limited to implementations that solve any or all of the disadvantages noted in any part of this disclosure.

A device and a method for removing fluid from an underwater container are disclosed hereinafter. One example of the container is an oil tank of a shipwreck. The device has a drill bit and a suction device, that starts suctioning the fluid from the container immediately, when the drill bit punctures the container. The suction device surrounds flutes of the rotating drill bit, wherein the oil escaping from the container flows via the flutes towards the suction device.

The drill bit has multiple sections that are utilized during different steps of the method. In the first step of one embodiment, the drill bit has a spotting drill section, narrow head of the drill bit that prevents wandering when the drilling is started on an unprepared container surface. The second step applies a twist drill section having at least one flute wherein a larger diameter is drilled onto the container surface. The third step contains a tap drill section for tapping a thread to the drilled hole. All three steps may be executed consecutively. The operator does not need to lift the tools from the drilling position, while the suction device ensures that oil does not escape during the drilling procedure.

In one embodiment, the device comprises an indicator, depth gauge and/or a controller to provide suitable rotation speed for each step of the drilling process. The first step may be rotated at higher speed than the second step. When the device enters the third step, tapping tread to the drilled hole, the rotational speed may be reduced and controlled to prevent damaging the tapped thread. In one embodiment, the device comprises an indicator as a seal member that starts to compress when the third step begins. The user may detect the seal member being activated during manual drilling by feeling a change in the device vibrations. In one embodiment, the seal member expands to provide a visual clue to the user about the third step.

The drill bit and the suction device are in one embodiment separable. If, for example, the drill bit must be changed during the drilling procedure due to breakage or wear, the suction device ensures that the open hole does not leak oil into the environment.

The device and the method are applicable to various underwater operations. The container may be any container positioned below the water surface. In one use case, the container is part of a marine vessel, a ship or a boat, lying at the seabed. In one embodiment, the device is used to drill through ship's hull. In one embodiment, the device is used to drill a hole through the oil tank or a fuel tank.

The device and the method as disclosed herein provide a simple solution to operate safely underwater, in harsh conditions, and remove fluids from a shipwreck. Simple method steps are important in underwater operations. The containers may be in very tight spaces where it may be impossible to conduct multiple tool changes. Overall, the risk of hazardous fluids escaping into the environment is mitigated.

Many of the attendant features will be more readily appreciated as they become better understood by reference to the following detailed description considered in connection with the accompanying drawings. The embodiments described below are not limited to implementations which solve any or all the disadvantages of known shipwreck salvage methods or underwater drilling techniques.

### BRIEF DESCRIPTION OF THE DRAWINGS

The present description will be better understood from the following detailed description read in light of the accompanying drawings, wherein
FIG. 1 illustrates schematically, as an isometric view, one exemplary embodiment of a device for removing fluid from an underwater container;
FIG. 2 illustrates schematically an exploded parts view of one exemplary embodiment of the device;
FIG. 3 illustrates schematically a simplified use case of underwater operation of the device;
FIG. 4a illustrates schematically a side view of a first step of a method for using the device;
FIG. 4b illustrates schematically a side view of a second step of the method for using the device;
FIG. 4c illustrates schematically a side view of a third step of the method for using the device;
FIG. 4d illustrates schematically a side view of a fourth step of the method for using the device; and
FIG. 5 illustrates schematically a side view of the fourth step of the method for using another embodiment of the device.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or any equivalent functions and sequences may be accomplished by different examples.

Although the present examples are described and illustrated herein as being implemented in emptying tank of a shipwreck, they are provided as an example and not a limitation. As those skilled in the art will appreciate, the present examples are suitable for application in a variety of different types of marine salvage or cleaning operations.

As used herein, terms of relative elevation, such as "top," "bottom," "upper," lower," "above," "below," "up," and "down," when used in the context of the method or a device for removing fluid from an underwater container, are used in their ordinary sense, that is, with respect to a direction of a gravitational force, such that gravity pulls objects down. Terms referring to "visible", are used with respect to a viewer monitoring the device operation, from which a diver is expected to typically view the device.

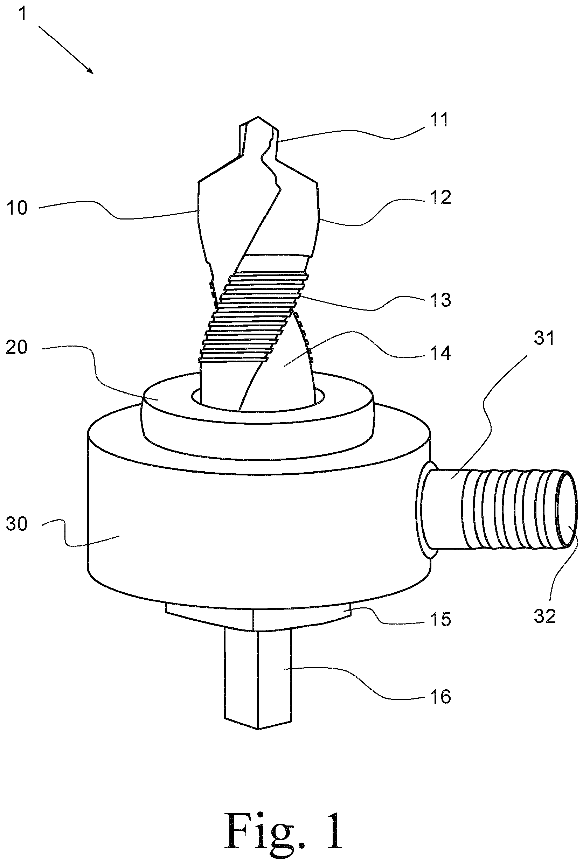

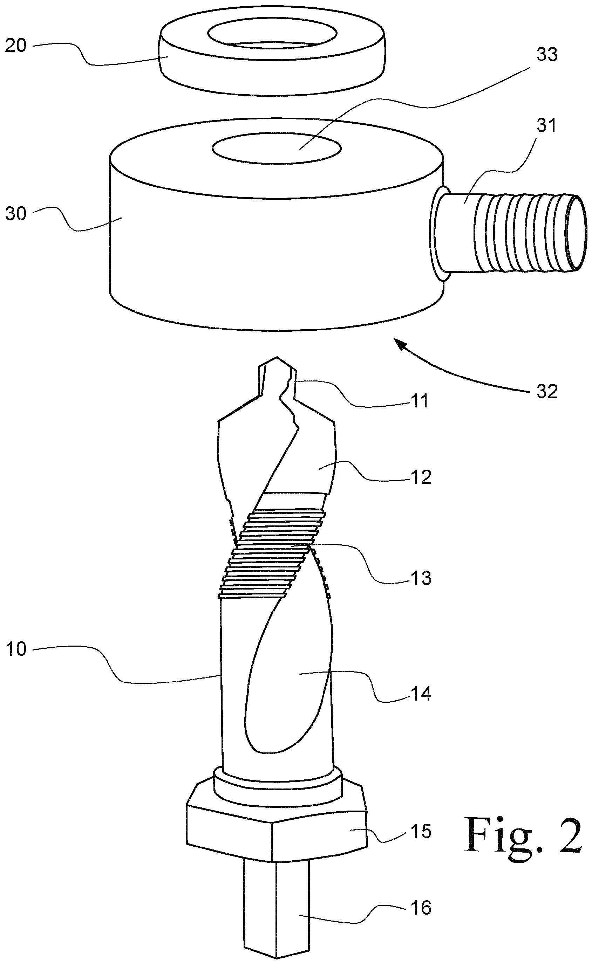

FIG. 1 illustrates schematically, as an isometric view, one exemplary embodiment of a device 1 for removing fluid from an underwater container 3. FIG. 2 illustrates the same device 1 as an exploded parts view.

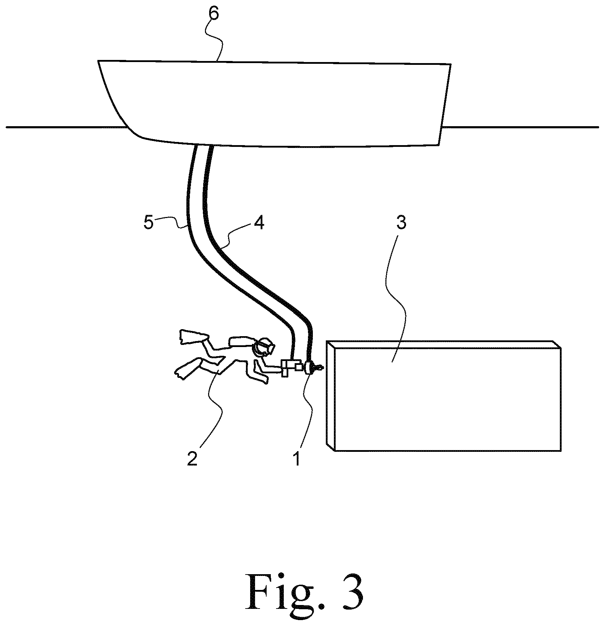

Primary components of the device 1 are a drill bit 10 and a suction device 30. The suction device 30 is configured to surround the drill bit 10, when the drill bit 10 is in operation. One use scenario is illustrated schematically in Figure 3, where a user 2 - a diver - operates the device 1 underwater, drilling a hole through the underwater container 3. The device 1 is in this example operated by a hydraulic drill. A surface vessel, a boat or a ship carries hydraulic equipment suitable for operating the hydraulic drill via tubing 5. The surface vessel 6 carries also a waste tank for collecting the contents of the underwater container 3, and a pump for providing suction to the device 1 via a suction hose 4. The suction pumps the fluid from the underwater container 3 to the surface vessel 6 waste tank. In this example the underwater tank 3 is an oil tank of the shipwreck lying on a seabed. The fluid may be any liquid that is suitable to be pumped to the waste tank. In one embodiment, the fluid comprises a gas that is collected by the suction of the pump. The surface vessel 6 may carry suitable separator devices to collect various fluid substances.

The drill bit 10 comprises multiple sections that are used at consecutive steps of the method as the drilling progresses. In one embodiment, the tip of the drill bit 10 comprises a spotting drill section 11 that is used for starting the drilling procedure. The spotting drill section is narrower than the following sections and allows the drill to start quickly, mitigating the risk that the drill bit would travel along the container 3 surface when drilling.

Following the spotting drill section 11 is a twist drill section 12. In one embodiment, the drill bit 10 does not have the spotting drill section 11, as the twist drill section 12 starts from the tip of the drill bit 10. The twist drill section 12 has at least one flute 14. In the example of FIG. 1 the twist drill section 12 has two flutes 14. The structure of the twist drill section 12 may be designed in various ways. The flute 14 allows the fluid to flow out of the container 3, when the container 3 wall has been breached.

Next to the twist drill section 12 is a tap drill section 13. The tap drill section 13 forms a thread into the container 3 wall. The thread may be used for securing the drill bit 10 into the container wall. The container 3 may be emptied while the drill bit 10 stays in place at the container 3, there is no need to remove the drill bit 10. In the present example, the flute 14 extends through the spotting drill section 11, the twist drill section 12 and the tap drill section 13.

The rearmost section of the drill bit is a shank 16. The shank 16 is the end of the drill bit 10 grasped by the chuck of the drill, for example the hydraulic drill. The present example illustrates a hex drill bit shank 16, but various alternatives may be used according to the application, material to be drilled and the drill bit 10.

The suction device 30 comprises two openings 33 at opposite sides of the suction device 30 and a cavity 32 for the drill bit 10. The drill bit 10 is rotatably pushed through the suction device 30 for drilling the underwater container 3. In one embodiment the drill bit 10 is held from one side inside the suction device by a retainer, a flange or a similar structure. In one embodiment the drill bit 10 is separable from the suction device 30. Sometimes the drill bit 10 may wear or break during drilling, and it may be replaced without removing the suction device 30 from the container 3 wall. The fluid leaking from the partially drilled hole may be collected by the suction device 30.

The suction device 30 comprises an outlet 31 connectable to the suction hose 4. The outlet 31 extends to the cavity 32, and the flute 14 extends from the tip of the drill bit 10 - the spotting drill section 11 or the twist drill section 12 - to the cavity 32 during drilling of the underwater container 3, forming a passage for the fluid from the container 3 to the suction hose 4.

In one embodiment, the device 1 comprises a seal member 20 around the drill bit 10. The seal member 20 is configured to be compressed between the suction device 30 and the wall of the underwater container 3, when the tap drill section 13 proceeds into the underwater container 3. The seal member 20 is made of flexible material that allows the device operator 2 to detect that the drill bit 10 has advanced to the tap drill section 13. Examples of seal member 20 material are rubber, polyurethane, nitrile, silicone, EPDM, HNBR, PTFE, polyacrylate or composite materials. In one embodiment, the seal member 20 increases the resistance felt by the user 2 during drilling. Compression of the seal member 20 is one indicator that the thread is being cut by the tap drill section 13 and the drilling process is being finalized.

In one embodiment, the seal member 20 provides a visual indication when it is compressed. Examples of the visual indication are changing colour or rapid expansion. In one embodiment, the seal member 20 expands to become visible when it is compressed between the suction device 30 and wall of the underwater container 3.

In one embodiment, the suction device 30 comprises a depth gauge configured to measure depth of the drill bit 10 into the underwater container 3. The depth gauge may be detected visually as markers at the suction device 30 that are compared to markers at the drill bit 10. The user 2 may control the drill speed according to the drill section 11 - 13 being used.

In one embodiment, the depth gauge is connected to a drill speed controller, wherein the drill bit 10 rotation is selected for each section of the drill bit 10. The drill speed controller controls, in response to the detected drill bit 10 depth, suitable drilling speed and stops the drill bit rotation when the thread is complete. The drill speed controller may be connected to the hydraulic drill to control the drilling speed.

In one embodiment, the drill bit 10 comprises a retaining flange 15 between the shank 16 and the twist drill section 12. The retaining flange 15 is configured to limit the drill bit 10 depth into the suction device 30. In one embodiment, the position of the retaining flange is adjustable in the drill bit 10, for example along the shank 16. In one embodiment, the retaining flange 15 is configured to stop the drilling process, when the drill bit has advanced to the end of the tap drill section 13.

In one embodiment, the suction device 30 is a hydraulic banjo fitting. The suction device 30 may comprise threads at the shank 16 side of the drill at the opening 33, for installing a plug into the suction device. In one embodiment, the plug may be used to fasten the suction device 30 to the container 3 wall, while the drill bit 10 is removed. Continuous suction in the suction device 30 ensures that the fluid to be collected does not escape at any point of the process.

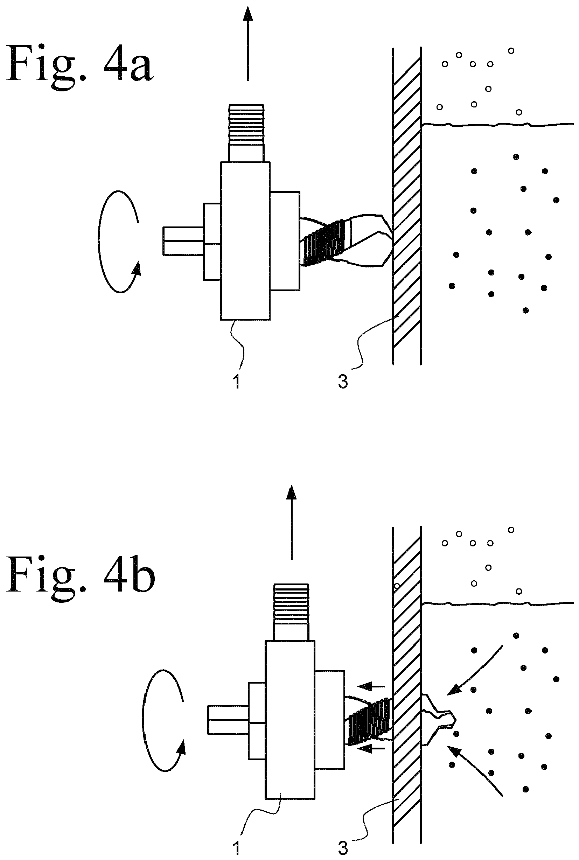

Figures 4a - 4d illustrate schematically one example of removing fluids from the underwater container 3, with a side view of four steps of the method for using the device 1. Figure 4a shows the first step, where the drill bit 10 is pushed through the suction device 30; and drilling, by the drill bit 10, into the wall of the underwater container 3. The spotting drill section 11 drills the first narrow spot into the container 3 wall. At this stage, the suction via the suction device 30 through the cavity 32 may be started to remove possible debris from the drilling position and to clear the murky water. In some examples, the spotting drill section 11 may extend through the container 3 wall. The flow from the container 3 to the outlet 31 may start at this step.

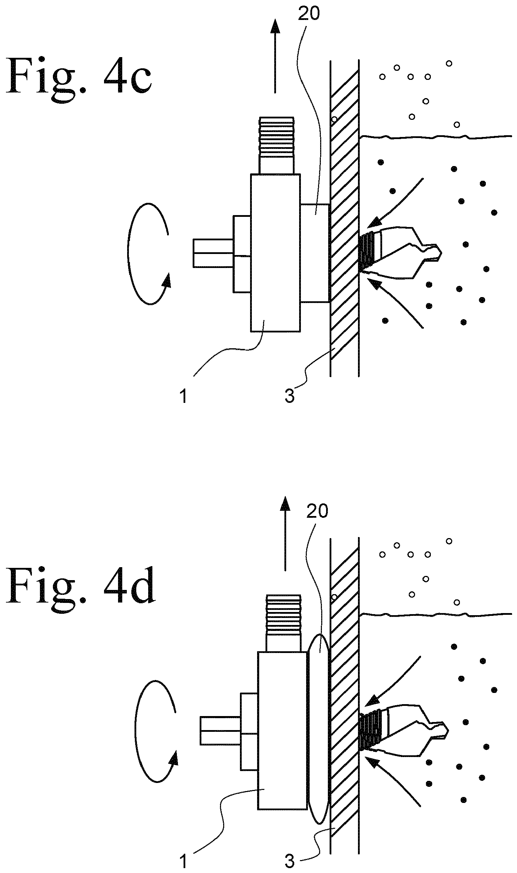

In the second step, in Figure 4b, the twist drill section 12 extends to the container 3 and to the fluid. The flow to the surface vessel 6 may start at this step, as the fluid flows via the flutes 14 to the suction device 30. In the third step of Figure 4c, the tap drill section 13 forms the thread into the container 3 wall, and the seal member 20 gets into contact with the container 3. In the fourth step, Figure 4d, the seal member 20 compresses between the container 3 and the suction device 30. The seal member 20 expands radially to be visible to the user 2. At this point the user stops the drilling process.

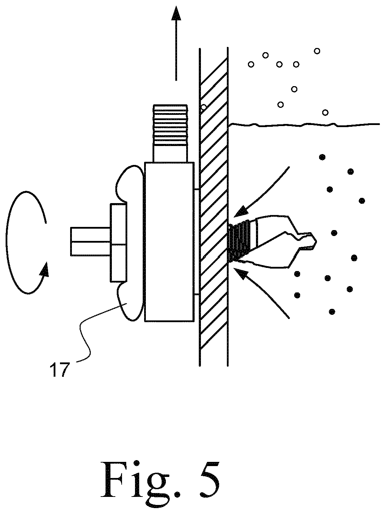

Figure 5 illustrates schematically on exemplary embodiment, where the drill bit 10 comprises a shank seal 17 around the drill bit 10 between the retaining flange 15 and the suction device 30. In the final step, the shank seal 17 compresses in a similar manner as the seal member 20, providing visual indicator to the user 2.

The user 2 may drill several holes to the container 3 and connect several hoses 4, connected into an underwater manifold, to enable faster draining of the container 3. The fluid inside the container 3 may be heavier or lighter than water and reside at the top or at the bottom of the tank. Many containers 3 comprise a venting valve to allow air into the container 3. Underwater, the venting valve may allow water to enter the container. In some embodiments, the container 3 contains air pockets. The number and the position of holes to be drilled into the container 3 may depend on the working environment, fluid to be removed, temperature of the fluid and the water. Various plugs one directional valves may be connected to the thread. In one embodiment, the plugs, valves or other threaded accessories are fitted into the thread through the suction device 30.

A device for removing fluid from an underwater container is disclosed herein. The device comprises a drill bit, having a twist drill section, at least one flute, a tap drill section and a shank. The device further comprises a suction device, comprising two openings at opposite sides of the suction device and a cavity for the drill bit, where the drill bit is rotatably pushed through the suction device for drilling the underwater container; and an outlet connectable to a suction hose, said outlet extending to the cavity. The at least one flute to the cavity during drilling the underwater container. In one embodiment, the device comprises a seal member around the drill bit, configured to be compressed between the suction device and the underwater container, when the tap drill section proceeds into the underwater container. In one embodiment, the seal member provides a visual indication when it is compressed. In one embodiment, the seal member expands to become visible when it is compressed between the suction device and the underwater container. In one embodiment, the suction device comprises a depth gauge configured to measure depth of the drill bit into the underwater container. In one embodiment, the depth gauge is connected to drill speed controller, wherein the drill bit rotation is selected for each section of the drill bit. In one embodiment, the drill bit comprises a retaining flange between the shank and the twist drill section for limiting the drill bit depth into the suction device. In one embodiment, the drill bit comprises a shank seal around the drill bit between the retaining flange and the suction device. In one embodiment, the drill bit is separable from the suction device. In one embodiment, the suction device is a hydraulic banjo fitting.

Alternatively, or in addition, a method for removing fluid from an underwater container by a device is disclosed herein. The device comprises a drill bit, having a twist drill section, at least one flute, a tap drill section, a shank, a suction device, comprising two openings at opposite sides of the suction device and a cavity for the drill bit, where the drill bit is rotatably pushed through the suction device for drilling the underwater container; and an outlet connectable to a suction hose, said outlet extending to the cavity. The method comprises the steps of: pushing the drill bit through the suction device; drilling, by the drill bit, into the underwater container; sucking through the suction device liquid through the cavity, wherein the at least one flute extending to the cavity leads fluid from the underwater container to the outlet. In one embodiment, the method comprises compressing a seal member around the drill bit between the suction device and the underwater container, when the tap drill section proceeds into the underwater container. In one embodiment, the method comprises providing, by the seal member, a visual indication when it is compressed. In one embodiment, the method comprises measuring, by a depth gauge, depth of the drill bit into the underwater container. In one embodiment, the method comprises selecting the drill bit rotation speed for each section of the drill bit by a drill speed controller connected to the depth gauge.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that any reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A device (1) for removing fluid from an underwater container (3), comprising:
a drill bit (10), having a twist drill section (12), at least one flute (14), a tap drill section (13) and a shank (16);
**characterized by** the device (1) further comprising:
a suction device (30), comprising two openings (33) at opposite sides of the suction device (30) and a cavity (32) for the drill bit (10), where the drill bit (10) is rotatably pushed through the suction device (30) for drilling the underwater container (3); and
an outlet (31) connectable to a suction hose (4), said outlet (31) extending to the cavity (32); wherein
the at least one flute (14) extends to the cavity (32) during drilling the underwater container (3).

2. A device (1) according to claim 1, **characterized by** comprising a seal member (20) around the drill bit (10), configured to be compressed between the suction device (30) and the underwater container (3), when the tap drill section (13) proceeds into the underwater container (3).

3. A device (1) according to claim 2, **characterized in that** the seal member (20) provides a visual indication when it is compressed.

4. A device (1) according to claim 2 or claim 3, **characterized in that** the seal member (20) expands to become visible when it is compressed between the suction device (30) and the underwater container (3).

5. A device (1) according to any of the claims 1 to 4, **characterized in that** the suction device (30) comprises a depth gauge configured to measure depth of the drill bit (10) into the underwater container (3).

6. A device (1) according to claim 5, **characterized in that** the depth gauge is connected to drill speed controller, wherein the drill bit (10) rotation is selected for each section of the drill bit (10).

7. A device (1) according to any of the claims 1 to 6, **characterized in that** the drill bit (10) comprises a retaining flange (15) between the shank (16) and the twist drill section (12) for limiting the drill bit (10) depth into the suction device (30).

8. A device (1) according to claim 7, **characterized in that** the drill bit (10) comprises a shank seal (17) around the drill bit (10) between the retaining flange (15) and the suction device (30).

9. A device (1) according to any of the claims 1 to 8, **characterized in that** the drill bit (10) is separable from the suction device (30).

10. A device (1) according to any of the claims 1 to 9, **characterized in that** the suction device (30) is a hydraulic banjo fitting.

11. A method for removing fluid from an underwater container (3) by a device (1), comprising:
a drill bit (10), having a twist drill section (12), at least one flute (14), a tap drill section (13) and a shank (16);
**characterized in that** the device (1) comprises:
a suction device (30), comprising two openings (33) at opposite sides of the suction device (30) and a cavity (32) for the drill bit (10), where the drill bit (10) is rotatably pushed through the suction device (30) for drilling the underwater container (3); and
an outlet (31) connectable to a suction hose (4), said outlet (31) extending to the cavity (32); wherein the method comprises the steps of:
pushing the drill bit (10) through the suction device (30);
drilling, by the drill bit (10), into the underwater container (3);
sucking through the suction device (30) liquid through the cavity (32), wherein the at least one flute (14) extending to the cavity (32) leads fluid from the underwater container (3) to the outlet (31).

12. A method according to claim 11, **characterized by** compressing a seal member (20) around the drill bit (10) between the suction device (30) and the underwater container (3), when the tap drill section (13) proceeds into the underwater container (3).

13. A method according to claim 12, **characterized by** providing, by the seal member (20), a visual indication when it is compressed.

14. A method according to any of the claims 11 to 13, **characterized by** measuring, by a depth gauge, depth of the drill bit (10) into the underwater container (3).

15. A method according to claim 14, **characterized by** selecting the drill bit (10) rotation speed for each section of the drill bit (10) by a drill speed controller connected to the depth gauge.
